# EUROPEAN PATENT SPECIFICATION

(11) **EP 4 116 132 B1**
(45) Date of publication and mention of the grant of the patent: **11.11.2026**
(21) Application number: 22183959.0
(22) Date of filing: 08.07.2022
(51) Int. Cl.: B60L 3/00, B60L 58/16, G01R 31/392

(54) **SYSTEM AND METHOD OF MONITORING BATTERY**
SYSTEM UND VERFAHREN ZUR ÜBERWACHUNG EINER BATTERIE
SYSTÈME ET PROCÉDÉ DE SURVEILLANCE DE BATTERIE

(30) Priority: 09.07.2021 KR 20210090208
(43) Date of publication of application: 11.01.2023
(73) Proprietor: SK On Co., Ltd., Seoul 03161 (KR)
(72) Inventor: JEONG, Da Eun, 34124 Daejeon (KR); KIM, Tae Kyun, 34124 Daejeon (KR); HEO, Tae Hyung, 34124 Daejeon (KR); KIM, Sang Hoon, 34124 Daejeon (KR); LEE, Byung Eun, 34124 Daejeon (KR); JEONG, Moon Goo, 34124 Daejeon (KR)
(74) Representative: Stolmár & Partner Patentanwälte PartG mbB

(56) References cited:
- US-A1- 2017 129 361
- US-A1- 2017 282 739
- US-A1- 2019 392 320

## Description

### CROSS-REFERENCE TO RELATED APPLICATION(S)

This application claims benefit of priority to Korean Patent Application No. 10-2021-0090208 filed on July 09, 2021 in the Korean Intellectual Property Office.

### TECHNICAL FIELD

The present disclosure relates to a battery monitoring system.

### BACKGROUND

As the demand for hybrid vehicles or electric vehicles (hereinafter simply referred to as "vehicles") has increased, the demand for batteries has also increased. Business operators in various fields related to vehicles have economic interests depending on how a vehicle user utilizes a battery of the vehicle, and the vehicle user also needs to appropriately operate the battery to promote convenience in vehicle driving. Therefore, it is desirable to appropriately manage operations of a battery for a vehicle that is currently being actively distributed. US 2017/129361 A1 describes methods and systems for monitoring data of battery usage of electric vehicles using battery monitoring sensors. US 2019/392320 A1 describes a battery controlling method based on artificial intelligence to obtain characteristic battery data. US 2017/282739 A1 relates to a server for providing a battery display status of an electric vehicle based on the results of an analysis on an electric vehicle driver's driving data and battery charging data.

### SUMMARY

Various implementations of a battery management service currently provided to vehicle users and business operators may not provide unprofessional or consumer-friendly battery information indicators due to the use of highly technical terms or jargons that may not be easily understood by many users. In addition, there is a lack of monitoring, quantitative judgment, and guide systems for comprehensive user battery management behaviors such as charging, driving, parking, and the like.

An aspect of the present invention is to provide a battery monitoring system capable of implementing a battery monitoring service providing a battery management guide based on battery lifespan prediction, abnormal battery behavior detection, and a battery management score. The present invention is defined in independent claims 1 and 13. Preferred embodiments thereof are defined in the dependent claims.

According to an aspect of the present disclosure, a battery monitoring system includes a data receiver configured to receive battery information data and vehicle information data from a data collecting device connected to a vehicle, wherein the battery information data and the vehicle information data include at least one of a voltage, a current, a temperature, a state of charge (SOC), a state of health (SOH), charge information, a charge/discharge history, driving information, a battery temperature, or an external temperature of the battery. The battery monitoring system further includes a battery management score calculator configured to calculate, based on the battery information data and the vehicle information data, factors affecting battery degradation among a charging habit, a driving habit and a parking habit of a user, and to calculate, based on the factors, a battery management score. The battery management score may be calculated by deducting a point from a total score whenever one of the factors affecting battery degradation is applied, or by calculating a charging habit score, a driving habit score and a parking habit score and calculating the battery management score as a sum or average of the charging habit score, the driving habit score and the parking habit score. The battery management score is stored in a database, and an information transmitter transmits the battery management score to a terminal.

According to another aspect of the present disclosure, a method of monitoring a battery includes receiving battery information data and vehicle information data from a data collecting device connected to a vehicle, wherein the battery information data and the vehicle information data include at least one of a voltage, a current, a temperature, a state of charge (SOC), a state of health (SOH), charge information, a charge/discharge history, driving information, a battery temperature, or an external temperature of the battery. The method further includes calculating, based on the battery information data and the vehicle information data, factors affecting battery degradation among a charging habit, a driving habit and a parking habit of a user, and calculating, based on the factors, a battery management score. The battery management score may be calculated by deducting a point from a total score whenever one of the factors affecting battery degradation is applied, or by calculating a charging habit score, a driving habit score and a parking habit score and calculating the battery management score as a sum or average of the charging habit score, the driving habit score and the parking habit score. The method further includes predicting a remaining lifespan of the battery based on the received battery information data, and transmitting, to a terminal, the battery management score and the remaining lifespan of the battery.

According to example embodiments of the present disclosure, a battery management score may be calculated by comprehensively calculating factors affecting battery degradation among a charging habit, a driving habit, and a parking habit of a user, thereby effectively managing a battery through a consumer-friendly and quantified battery indicator. In addition, extension of a battery lifespan may be induced by providing a battery management guide to the user, and secondary use value and eco-friendly added value of a battery may be maximized by extending the battery lifespan. In addition, various business operators who have interests due to battery operation may benefit from economic and eco-friendly added value due to the extension of the battery lifespan.

The various and beneficial advantages and effects of the present invention are not limited to the above, and will be more easily understood in the course of describing specific example embodiments.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a block diagram illustrating a system for providing a battery monitoring service according to an example embodiment of the present disclosure;
FIG. 2 is a block diagram illustrating a battery monitoring server according to an example embodiment of the present disclosure;
FIG. 3 is a data flowchart illustrating a method of operating a battery monitoring system according to an example embodiment of the present disclosure;
FIG. 4 is a diagram illustrating factors affecting battery degradation according to an example embodiment of the present disclosure;
FIG. 5 is a data flowchart illustrating a method of operating a battery monitoring system according to an example embodiment of the present disclosure;
FIG. 6 is a flowchart illustrating an overall operation of a battery monitoring system according to an example embodiment of the present disclosure; and
FIG. 7 is a diagram illustrating pieces of information provided by a battery monitoring system according to an example embodiment of the present disclosure.

### DETAILED DESCRIPTION

Details of certain features in the example embodiments are included in the detailed description and drawings.

The aspects and features of the present disclosure and methods of achieving the aspects and features will be apparent by referring to the example embodiments to be described in detail with reference to the accompanying drawings.

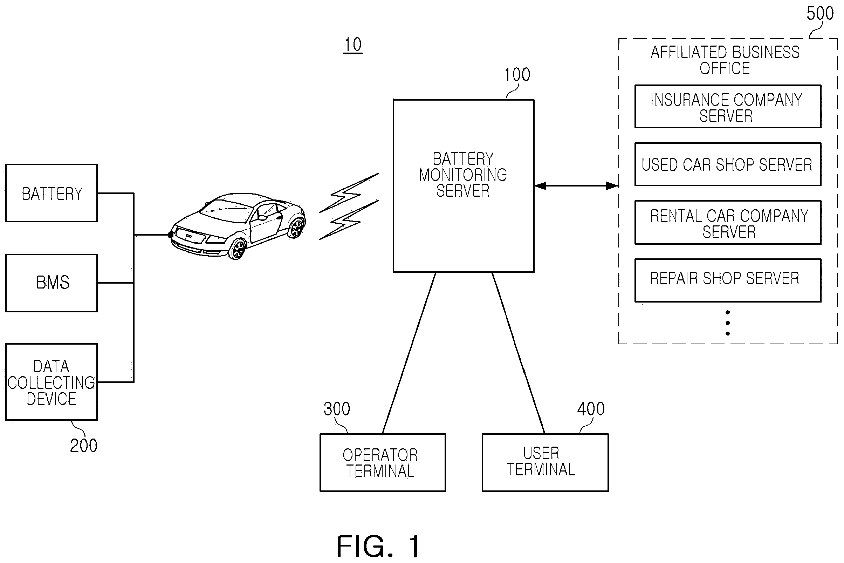

FIG. 1 is a block diagram illustrating a system for providing a battery monitoring service according to an example embodiment of the present disclosure.

Referring to FIG. 1, a battery monitoring system 10 may refer to a system for extending a battery lifespan, preventing an accident, and providing convenience by providing a battery usage and management guide to a user, based on management indicators related to factors affecting battery degradation. The management indicators may include battery lifespan prediction, abnormal battery behavior prediction, and a battery management score, and each management indicator may refer to a battery state and a battery management habit of the user being quantified in a format that is easy for the user to understand.

The battery monitoring system 10 may include a battery monitoring server 100, a data collecting device 200, an operator terminal 300, a user terminal 400, and an affiliated business office server 500. A vehicle may include a battery charging and holding electric energy, driving energy of the vehicle, and a battery management system (BMS) managing the battery, and the BMS may monitor a state of the battery to serve to automatically manage the battery such that the battery is maintained and used under an optimal condition. The data collecting device 200 may be connected to the BMS and the like of the vehicle to receive various pieces of state information of the battery and output the various pieces of state information to the outside. The data collecting device 200 may be an on-board diagnostic (OBD) device or an on-board diagnostic version II (OBD-II) device connected to an electric vehicle.

The data collecting device 200 may transmit, to the battery monitoring server 100, vehicle information data and battery information data in real time via short-range communication (Wi-Fi and Bluetooth) or a mobile communication network (LTE).

An operator, a person who manages and operates multiple vehicles, may be a fleet management business operator, a rental car business operator, a corporate vehicle business manager, an insurance company, and the like. The operator terminal 300 may be a personal computer (PC) of the operator.

A user may be a personal vehicle owner or driver. The user terminal 400 may include a mobile phone, a smart phone, a laptop computer, a tablet PC, a wearable device, and the like of the user.

Depending on a type of operator and user, a search result may target all managed vehicles, or may be limited to a driven vehicle or an owned vehicle.

The affiliated business office server 500 may include a repair shop server diagnosing a vehicle or a battery, and repairing or replacing the vehicle or the battery. In addition, the affiliated business office server 500 may include various business office servers that have interests due to battery operation, and may include, for example, an insurance company server, a used car shop server, a rental car company server, and the like.

According to an example embodiment of the present disclosure, the battery monitoring server 100 may receive the battery information data and the vehicle information data from the data collecting device 200, and predict a lifespan of the battery using the battery information data and the vehicle information data, detect abnormal battery behavior, and calculate a battery management score. The battery information data and the vehicle information data include a voltage, a current, a temperature, a state of charge (SOC), a state of health (SOH), charge information, a charge/discharge history, driving information, a battery temperature, and an external temperature of the battery.

The battery management score is calculated by comprehensively calculating factors affecting battery degradation among a charging habit, a driving habit, and a parking habit of the user, thereby effectively managing the battery through a consumer-friendly and quantified battery indicator. In addition, extension of the lifespan of the battery may be induced by providing a battery management guide to the user, and secondary use value and eco-friendly added value of the battery may be maximized by extending the battery lifespan.

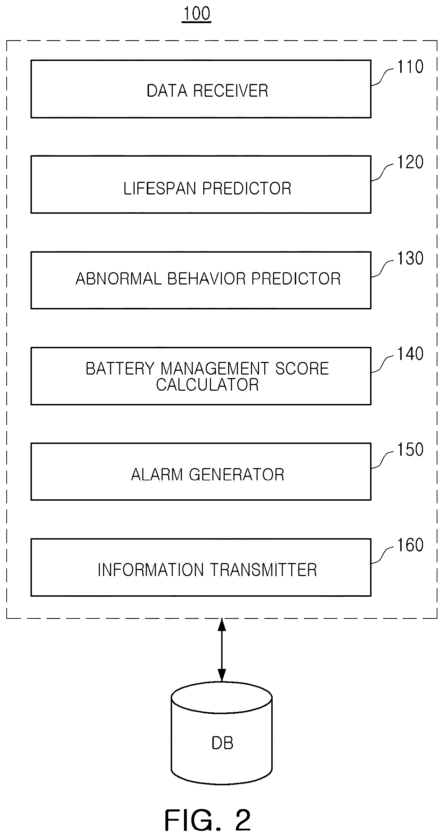

FIG. 2 is a block diagram illustrating a battery monitoring server according to an example embodiment of the present disclosure.

Referring to FIG. 2, the battery monitoring server 100 may include a data receiver 110, a lifespan predictor 120, an abnormal behavior predictor 130, a battery management score calculator 140, an alarm generator 150, and an information transmitter 160. The lifespan predictor 120 predicting a lifespan of a battery and the abnormal behavior predictor 130 predicting abnormal battery behavior may quantify a state of the battery in a format that is easy for a user to understand, and the battery management score calculator 140 may quantify a battery management habit of the user in a format that is easy for the user to understand.

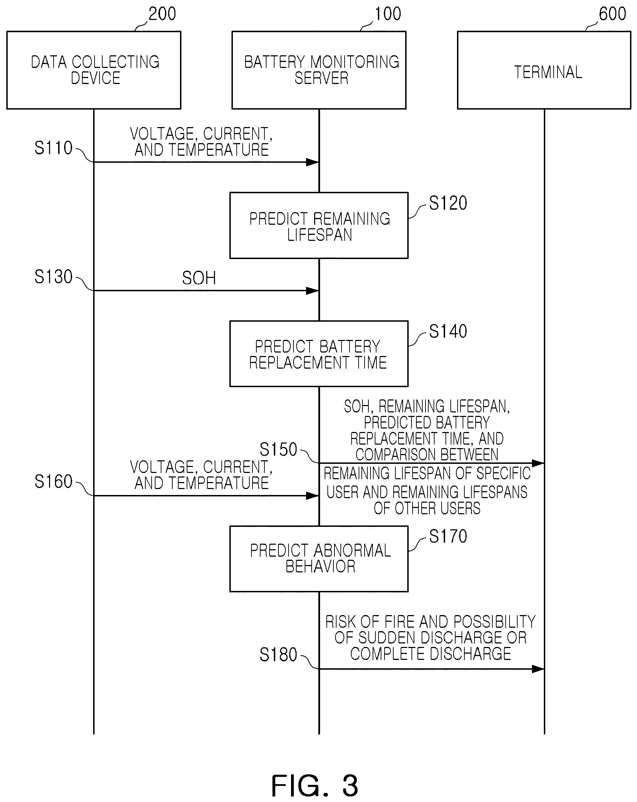

FIG. 3 is a data flowchart illustrating a method of operating a battery monitoring system according to an example embodiment of the present disclosure.

### Lifespan Predictor

Referring to FIGS. 2 and 3 together, the data receiver 110 may receive voltage, current, and temperature data of a battery through the data collecting device 200 (S110). The lifespan predictor 120 may predict a remaining lifespan of the battery from the voltage, current, and temperature data of the battery using an artificial intelligence (AI)-based SOH prediction algorithm (S120). The remaining lifespan of the battery may be stored in a database DB.

When an SOH of the battery falls below a predetermined level (for example, 80%), it may mean that the battery is no longer usable as a battery of a vehicle. The remaining lifespan may refer to a value obtained by predicting a battery lifespan, which is a period of time required for the SOH to reach the predetermined level. When additional battery degradation factors such as a battery management score factor to be described below and the like are identified, the additional degradation factors for lifespan prediction may be reflected.

In addition, the remaining lifespan of the battery may vary depending on a user driving habit for each user under the same driving conditions (a vehicle model, a driving distance, and the like). Accordingly, the lifespan predictor 120 may compare and analyze a remaining lifespan of a battery of a specific user and remaining lifespans of batteries of other users. A result of comparing the remaining lifespan of the specific user with the remaining lifespans of the other users may be stored in the database DB.

The data receiver 110 may receive an SOH generated by a BMS through the data collecting device 200 (S130). The SOH may refer to a current health state (%) of the battery. The SOH may be stored in the database DB.

The lifespan predictor 120 may predict, based on the SOH, a battery replacement time (S140). The predicted battery replacement time may be stored in the database DB.

The information transmitter 160 may inform an operator terminal and/or a user terminal (hereinafter, collectively referred to as a terminal; 600) of the SOH, remaining lifespan, predicted battery replacement time, and comparison between the remaining lifespan of the battery of the specific user and the remaining lifespans of the batteries of the other users (S150).

In some example embodiments, the information transmitter 160 may inform and guide the user regarding charging, driving, and parking habits of a vehicle so as to extend the lifespan of the battery.

### Abnormal Behavior Predictor

Abnormal battery behavior may refer to a voltage imbalance between battery cells, a change in temperature during battery charging, and the like. The data receiver 110 may receive the voltage, current, and temperature data of a battery through the data collecting device 200 (S160). The abnormal behavior predictor 130 may detect the abnormal battery behavior from the voltage, current, and temperature data of the battery using an AI-based prediction algorithm (S170). The abnormal battery behavior may be stored in the database DB.

In addition, additional degradation factors for predicting abnormal battery behavior, such as a physical position of a battery cell in a battery pack, may be reflected. For example, a temperature of the battery may vary depending on whether the battery cell is close to a coolant or an engine. Accordingly, different abnormal behaviors may appear depending on the position of the battery cell in the battery pack.

The information transmitter 160 may inform, based on the abnormal battery behavior, a terminal 600 of a risk of accidents such as fire, sudden discharge, or complete discharge (S180).

In some example embodiments, the information transmitter 160 may recommend a user to receive maintenance, and may automatically reserve an associated repair shop for the maintenance. In addition, the alarm generator 150 may transmit an alarm to charge a battery in advance, and may automatically reserve a field service for charging.

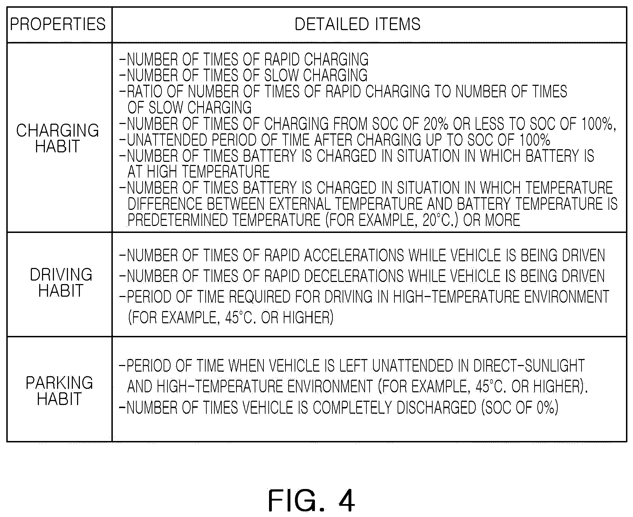

FIG. 4 is a diagram illustrating factors affecting battery degradation according to an example embodiment of the present disclosure.

### Battery Management Score

A battery management score may refer to an SOH management state being scored based on a charging habit, a driving habit, and a parking habit of a driver, which are factors affecting battery degradation. The battery management score calculator 140 may calculate the battery management score as an indicator indicating a battery management level for each user or each battery. A battery monitoring server may calculate the factors affecting battery degradation among the charging habit, the driving habit, and the parking habit of the driver, and may calculate, based on the factors, the battery management score. The battery management score may be stored in the database DB.

Referring to FIG. 4, the charging habit of the driver may include the number of times of rapid charging, the number of times of slow charging, a ratio of the number of times of rapid charging to the number of times of slow charging, the number of times of charging from an SOC of 20% or less to an SOC of 100%, an unattended period of time after charging up to an SOC of 100%, the number of times a battery is charged in a situation in which the battery is at high temperature, the number of times the battery is charged in a situation in which a temperature difference between an external temperature and a battery temperature is a predetermined temperature (for example, 20°C.) or more, and the like.

The driving habit of the driver may include the number of rapid accelerations while a vehicle is being driven, the number of rapid decelerations while the vehicle is being driven, and a period of time required for driving in a high-temperature environment (for example, 45°C.).

The parking habit of the driver may include a period of time when the vehicle is left unattended in a direct-sunlight and high-temperature environment, the number of times the vehicle is completely discharged (for example, an SOC of 0%), and the like.

Referring to FIGS. 2 and 4 together, the battery management score calculator 140 calculates the battery management score in a manner of deducting a point from a total score whenever one of the factors affecting battery degradation is applied. Or, the battery management score calculator 140 calculates a charging habit score, a driving habit score, a parking habit score of the driver, respectively, and also calculates the battery management score as a sum or average of the charging habit score, the driving habit score, and the parking habit score. In addition, the battery management score calculator 140 may calculate an comprehensive battery management score by reflecting a remaining lifespan predicted through an AI-based prediction algorithm, an SOH of a BMS, and the like in the battery management score.

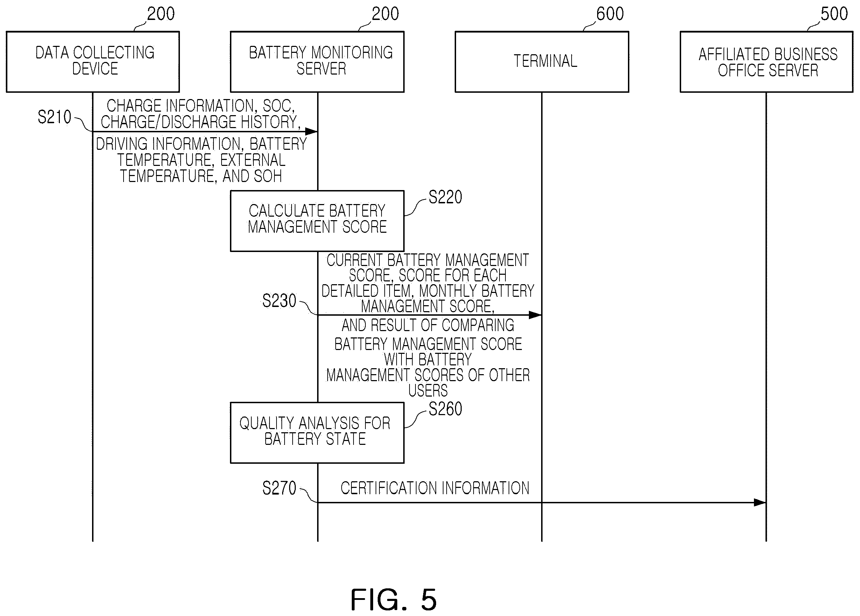

FIG. 5 is a data flowchart illustrating a method of operating a battery monitoring system according to an example embodiment of the present disclosure.

Referring to FIGS. 2 and 5 together, the data receiver 110 may receive, from the data collecting device charge information, an SOC, a charge/discharge history, driving information, a battery temperature, an external temperature, and an SOH (S210). The battery management score calculator 140 may calculate, based on the data received from the data receiver 110, a battery management score (S220). The battery management score may be stored in the database DB.

### Charging Habit

Specifically, the data receiver 110 may receive charge information (for example, a charging current value from a BMS, and the like) from the data collecting device 200. The battery management score calculator 140 may calculate, based on the charge information, the number of times of rapid charging, the number of times of slow charging, a ratio of the number of times of rapid charging to the number of times of slow charging, and the like.

The data receiver 110 may receive, from the data collecting device 200, the SOC and the charge/discharge history. The battery may be charged and discharged at an SOC of 50% (or in a range of 20% to 80%). Accordingly, the battery management score calculator 140 may calculate the number of times of charging at an SOC of 20% or less, the number of times of charging up to an SOC of 100%, and the like.

The data receiver 110 may receive driving information from the data collecting device 200. The battery management score calculator 140 may calculate, based on the driving information, the SOC, and the charge/discharge history, an unattended period of time after 100% charging.

The data receiver 110 may receive a battery temperature from the data collecting device 200. For example, when the battery temperature is 35°C. or higher, rapid charging with an SOC of 80% or higher may affect battery degradation. Accordingly, the battery management score calculator 140 may calculate, based on the battery temperature and the charge/discharge history, the number of times the battery is charged in situation in which the battery is at high temperature.

The data receiver 110 may receive an external temperature from the data collecting device 200. The battery management score calculator 140 may calculate, based on the external temperature, the battery temperature, and the charge/discharge history, the number of times the battery is charged in a situation in which a temperature difference between the external temperature and the battery temperature is a predetermined temperature (for example, 20°C.) or more, and the like.

### Driving Habit

The data receiver 110 may receive, from the data collecting device 200, a current of the BMS, an output of a micro controller unit (MCU), and the like. The battery management score calculator 140 may calculate, using the current of the BMS, the output of the MCU, and the like, the number of rapid accelerations while a vehicle is being driven and the number of rapid decelerations while the vehicle is being driven.

The battery management score calculator 140 may calculate, using the external temperature, the driving information, and the like, a period of time when the vehicle is driven in a high-temperature environment (for example, 45°C. or higher).

### Parking Habit

The battery management score calculator 140 may calculate, using the external temperature, the driving information, and the like, a period of time when the vehicle is left unattended in a direct-sunlight and high-temperature environment (for example, 45°C. or higher) .

The battery management score calculator 140 may calculate, using the SOC, the charge/discharge history, and the like, the number of times the vehicle is completely discharged (an SOC of 0%).

The battery management score calculator 140 may compare and analyze a battery management score of a specific user and battery management scores of other users stored in the database DB.

The information transmitter 160 may transmit, to the terminal 600, a current battery management score of an individual, a score for each detailed item, a monthly battery management score of the individual, and a result of comparing the battery management score of the individual with battery management scores of other users (S230).

In some example embodiments, a guide for improved charging, driving, and parking directions may be provided to a user with a low battery management score. For example, a guide may be provided to lower a rapid charging rate from 80% to 60%, or to reduce the number of rapid accelerations.

In addition, a differential incentive for each battery management score may be provided to a user with a high battery management score, and a differential decentive for each battery management score may be provided to a user with a low battery management score.

For example, the high battery management score may refer to a high battery residual value, and thus a used car price may be set high when selling a used car. Accordingly, the user with the high battery management score may be provided with quality certification or quality assurance for a battery usage history and a battery state when a used car transaction is performed. Accordingly, the battery management score calculator 140 may generate, based on the battery management score, certification information for certifying or assuring quality of a battery state (S260), and the information transmitter 160 may transmit the certification information on the battery state to the affiliated business office server 500 (S270). In some example embodiments, the user with the high battery management score may receive, based on the battery management score, a discount on insurance premiums.

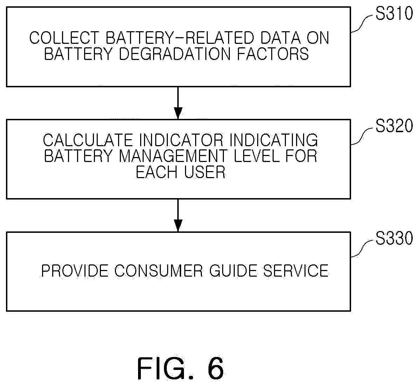

FIG. 6 is a flowchart illustrating an overall operation of a battery monitoring system according to an example embodiment of the present disclosure.

Referring to FIG. 6, the battery monitoring service system may collect battery information data to determine factors affecting battery degradation (S310). For example, the factors affecting battery degradation may include factors determined by the use and management of a battery in addition to factors determined by the production of the battery, such as a physical position of a battery cell in a battery pack, and the like.

The battery monitoring service system may calculate, based on the factors determined by the use and management of the battery among the factors affecting battery degradation, an indicator indicating a battery management level for each user (S320). The indicator indicating the battery management level may include a battery management score, battery remaining lifespan prediction, abnormal battery behavior prediction, and the like.

The battery monitoring service system may provide, based on the indicator indicating the battery management level, information, an alarm, and a guide service to a user (S330). For example, the battery monitoring service system may inform the user of a predicted remaining lifespan, or may inform the user of a risk of fire and a possibility of sudden discharge or complete discharge when abnormal battery behavior is detected. In addition, the battery monitoring service system may recommend the user to receive maintenance and automatically reserve an associated repair shop for maintenance, transmit an alarm to charge the battery in advance, or automatically reserve a field service for charging.

In addition, the battery monitoring service system may provide a differential incentive for each battery management score to a user with a high battery management score, and provide a differential decentive for each battery management score to a user with a low battery management score. For example, the user with the high battery management score may be provided with quality certification or quality assurance for a battery usage history and a battery state when a used car transaction is performed, thereby providing, to the user, extension of a battery lifespan, prevention of an accident, and convenience.

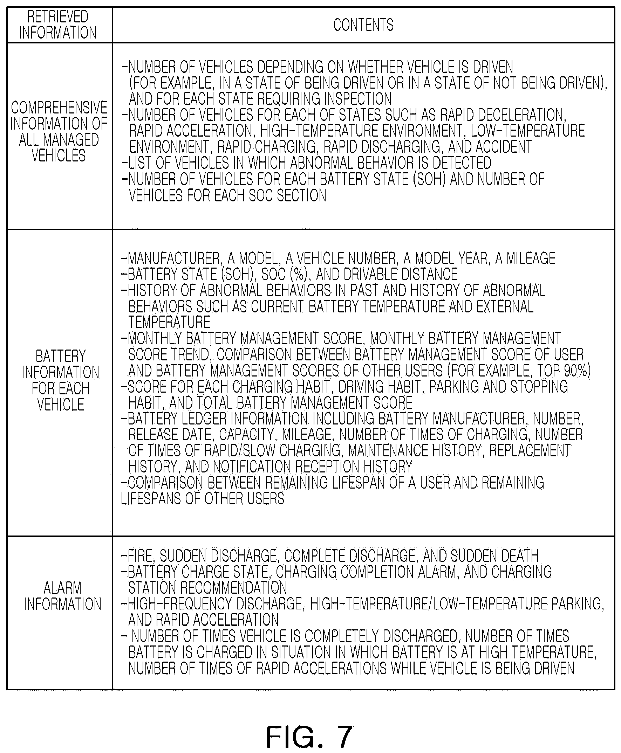

FIG. 7 is a diagram illustrating pieces of information provided by a battery monitoring system according to an example embodiment of the present disclosure.

Referring to FIG. 7, comprehensive information of all managed vehicles may be retrieved in the battery monitoring system. For example, the battery monitoring system may provide the number of vehicles depending on whether a vehicle is driven (for example, in a state of being driven or in a state of not being driven), and for each state requiring inspection. In addition, the battery monitoring system may provide the number of vehicles for each of states such as rapid deceleration, rapid acceleration, high-temperature environment, low-temperature environment, rapid charging, rapid discharging, an accident, and the like. In addition, the battery monitoring system may provide a list of vehicles in which an abnormal behavior is detected. In addition, the battery monitoring system may provide the number of vehicles for each battery state (SOH) and the number of vehicles for each SOC section.

Battery information for each vehicle may be retrieved in the battery monitoring system. For example, the battery monitoring system may provide vehicle information such as a manufacturer, model, vehicle number, model year, mileage, and the like. In addition, the battery monitoring system may provide a battery state (SOH) as bad, normal, and good or as a percentage (%), and may provide an SOC (%) and a drivable distance. In addition, the battery monitoring system may provide a history of abnormal behaviors in the past and a history of abnormal behaviors such as a current battery temperature, external temperature, and the like. In addition, the battery monitoring system may provide a monthly battery management score, a monthly battery management score trend, a comparison between a battery management score of a user and battery management scores of other users (for example, top 90%), and the like. In addition, the battery monitoring system may provide a score for each charging habit, driving habit, parking and stopping habit, and a battery management score. In addition, the battery monitoring system may provide battery ledger information including a battery manufacturer, a number, a release date, a capacity, a mileage, the number of times of charging, the number of times of rapid/slow charging, a maintenance history, a replacement history, a notification reception history, and the like. A battery ledger may refer to a collection of battery properties and usage history information. In addition, the battery monitoring system may provide a comparison between a remaining lifespan of a battery of a user and remaining lifespans of other users.

Specifically, the battery ledger information may refer to battery information collected over an entire lifespan cycle of a battery for each battery ID assigned per battery unit. The entire lifespan cycle of the battery may refer to a cycle from when the battery is first produced (sold) to when the battery is used, reused, and recycled (discarded). A battery unit may refer to a battery pack, a battery module, or a battery cell, and the battery ledger information may include production information, state information, and usage information of the battery. An information transmitter of a battery monitoring server may transmit, to a terminal, the battery ledger information including the production information generated when a battery is produced, the state information that is information on a current usage state of the battery, and the usage information that is information on a usage history of the battery. The battery ledger information may be stored in advance in a database.

Alarm information may be retrieved in the battery monitoring system. For example, the battery monitoring system may predict an abnormal behavior, and provide, based on a result of the prediction, a possibility of fire, sudden discharge, complete discharge, sudden death, or the like. In addition, the battery monitoring system may provide a battery charge state, a charging completion alarm, and a charging station recommendation. In addition, the battery monitoring system may provide attention to issues such as high-frequency discharge, high-temperature/low-temperature parking, rapid acceleration, and the like. In addition, the battery monitoring system may provide the number of times a vehicle is completely discharged, the number of times a battery is charged in a situation in which the battery is at high temperature, the number of rapid accelerations while the vehicle is being driven, and the like. An alarm history may be sorted by date in ascending or descending order. In case of an alarm within the last 7 days, a "NEW" badge may also be exposed.

According to an example embodiment of the present disclosure, a rental car company may expect an increase in sales revenue of used vehicles by preserving a residual battery value, and may provide, to a consumer, a benefit corresponding to the increase in revenue. An insurance company may reduce an accident rate by preventing a battery accident and provide psychological stability to the consumer. In addition, it is possible to improve, based on battery management of a driver and abnormality detection, a loss ratio of the insurance company, and to provide a benefit such as reduction of insurance premiums to the consumer. A used car shop may provide more accurate and transparent used vehicles by managing a usage history for each battery, and achieve service differentiation such as battery diagnosis, residual value setting, quality certification, and the like.

In addition, the battery monitoring system of the present disclosure may be used for various electric mobility devices such as an energy storage system (ESS), an uninterruptible power supply (UPS), and the like as well as a vehicle.

While example embodiments have been shown and described above, variations and enhancements of the disclosed example embodiments and other embodiments may be made within the scope of the present invention as defined by the appended claims.

## Claims

1. A battery monitoring system comprising:
a data receiver (110) in communication with a data collecting device (200) electrically or communicatively connected to a vehicle and configured to receive battery information data and vehicle information data from the data collecting device (200), wherein the battery information data and the vehicle information data include at least one of a voltage, a current, a temperature, a state of charge (SOC), a state of health (SOH), charge information, a charge/discharge history, driving information, a battery temperature, or an external temperature of the battery;
a battery management score calculator (140) coupled to receive the battery information data and the vehicle information data; and
an information transmitter (160) in communication with a terminal (600) and configured to transmit a battery management score to the terminal (600),
**characterized in that**
the battery management score calculator (140) is configured to:
calculate, based on the battery information data and the vehicle information data, factors affecting battery degradation among a battery charging habit, a driving habit and a parking habit of a user;
either calculate, based on the factors, the battery management score by deducting a point from a total score whenever one of the factors affecting battery degradation is applied, or calculate, based on the factors, a charging habit score, a driving habit score and a parking habit score of the user, and calculate the battery management score as a sum or average of the charging habit score, the driving habit score and the parking habit score; and
store the battery management score in a database.

2. The battery monitoring system of claim 1, wherein:
the battery management score calculator (140) is configured to compare a battery management score of a specific user with battery management scores of other users stored in the database; and
the information transmitter (160) is configured to transmit, to the terminal (600), a result of comparing the battery management score of the specific user with the battery management scores of the other users stored in the database.

3. The battery monitoring system of claim 1, wherein:
the battery monitoring system further includes a lifespan predictor (120);
the data receiver (110) is configured to receive, from the data collecting device (200), at least one of voltage, current, temperature data of a battery or a combination of the voltage, current, temperature data of the battery;
the lifespan predictor (120) is configured to predict a remaining lifespan of the battery based on the at least one of the voltage, current, temperature data, or the combination of the voltage, current, temperature data, using an artificial intelligence (AI)-based prediction algorithm, and store the remaining lifespan of the battery in the database; and
the information transmitter (160) is configured to transmit the remaining lifespan of the battery to the terminal (600).

4. The battery monitoring system of claim 3, wherein the battery management score calculator (140) is configured to calculate a comprehensive battery management score by reflecting the remaining lifespan in the battery management score.

5. The battery monitoring system of claim 3, wherein:
the data receiver (110) is configured to receive information on a state of health (SOH) of the battery from the data collecting device (200);
the lifespan predictor (120) is configured to calculate, based on the received SOH information, a predicted replacement time of the battery, and store the predicted replacement time of the battery in the database; and
the information transmitter (160) is configured to transmit, to the terminal (600), the predicted replacement time of the battery.

6. The battery monitoring system of claim 3, wherein:
the lifespan predictor (120) is configured to compare a remaining lifespan of a battery of a specific user with remaining lifespans of batteries of other users stored in the database; and
the information transmitter (160) is configured to transmit, to the terminal (600), a result of comparing the remaining lifespan of the battery of the specific user with the remaining lifespans of the batteries of the other users stored in the database.

7. The battery monitoring system of claim 1, further comprising:
an abnormal behavior predictor (130),
wherein the data receiver (110) is configured to receive, from the data collecting device (200), at least one of voltage, current, temperature data of a battery, or a combination of the voltage, current, temperature data of the battery,
the abnormal behavior predictor (130) is configured to detect an abnormal battery behavior based on the at least one of the voltage, current, temperature data, or the combination of the voltage, current, temperature data, using an AI-based prediction algorithm, and store the abnormal battery behavior in the database, and
the information transmitter (160) is configured to transmit, based on the abnormal battery behavior, a risk of an accident to the terminal (600).

8. The battery monitoring system of claim 7, wherein the abnormal battery behavior includes a voltage imbalance between different battery cells with the battery.

9. The battery monitoring system of claim 7, wherein the abnormal battery behavior includes a change in temperature inside the battery during battery charging.

10. The battery monitoring system of claim 1, wherein:
the battery management score calculator (140) is configured to generate, based on the battery management score, insurance premium information to be used to calculate an automobile insurance premium for a user; and
the information transmitter (160) is configured to transmit the insurance premium information to an external computer server.

11. The battery monitoring system of claim 1, wherein:
the battery management score calculator (140) is configured to generate, based on the battery management score, certification information for certifying or assuring quality of a battery state; and
the information transmitter (160) is configured to transmit the certification information on the battery state to an external computer server.

12. The battery monitoring system of claim 1, wherein:
the information transmitter (160) is configured to transmit, to the terminal (600), battery ledger information stored in the database; and
the battery ledger information includes production information generated when a battery is produced, state information that indicates a current usage state of the battery, and usage information that indicates a usage history of the battery.

13. A method of monitoring a battery of a vehicle, the method comprising:
receiving battery information data and vehicle information data from a data collecting device (200) electrically or communicatively connected to the vehicle, wherein the battery information data and the vehicle information data include at least one of a voltage, a current, a temperature, a state of charge (SOC), a state of health (SOH), charge information, a charge/discharge history, driving information, a battery temperature, or an external temperature of the battery;
calculating, based on the battery information data and the vehicle information data, factors affecting battery degradation among a battery charging habit, a driving habit and a parking habit of a user, and
either calculating, based on the factors, a battery management score by deducting a point from a total score whenever one of the factors affecting battery degradation is applied, or calculating, based on the factors, a charging habit score, a driving habit score and a parking habit score, and calculating a battery management score as a sum or average of the charging habit score, the driving habit score and the parking habit score;
predicting a remaining lifespan of the battery based on the received battery information data; and
transmitting, to a terminal (600), the battery management score and the remaining lifespan of the battery.

14. The method of claim 13, further comprising:
calculating a comprehensive battery management score by reflecting the remaining lifespan in the battery management score.

15. The method of claim 13, further comprising:
detecting an abnormal battery behavior based on the received battery information data.

## Patentansprüche

1. Batterieüberwachungssystem, umfassend:
einen Datenempfänger (110) in Kommunikation mit einer Datensammelvorrichtung (200), die elektrisch oder kommunikativ mit einem Fahrzeug verbunden ist und konfiguriert ist, um Batterieinformationsdaten und Fahrzeuginformationsdaten von der Datensammelvorrichtung (200) zu empfangen, wobei die Batterieinformationsdaten und die Fahrzeuginformationsdaten mindestens eines von einer Spannung, einem Strom, einer Temperatur, einem Ladezustand (SOC), einem Gesundheitszustand (SOH), Ladeinformationen, einem Lade-/Entladeverlauf, Fahrinformationen, einer Batterietemperatur oder einer Außentemperatur der Batterie beinhalten;
einen Batteriemanagement-Score-Rechner (140), der gekoppelt ist, um die Batterieinformationsdaten und die Fahrzeuginformationsdaten zu empfangen; und
einen Informationssender (160) in Kommunikation mit einem Endgerät (600) und konfiguriert, um einen Batteriemanagement-Score an das Endgerät (600) zu senden,
**dadurch gekennzeichnet, dass**
der Batteriemanagement-Score-Rechner (140) konfiguriert ist, um:
basierend auf den Batterieinformationsdaten und den Fahrzeuginformationsdaten Faktoren zu berechnen, die die Batterieverschlechterung unter einer Batterieladegewohnheit, einer Fahrgewohnheit und einer Parkgewohnheit eines Benutzers beeinflussen;
entweder basierend auf den Faktoren den Batteriemanagement-Score durch Abziehen eines Punkts von einem Gesamtscore zu berechnen, wann immer einer der Faktoren, die die Batterieverschlechterung beeinflussen, angewendet wird, oder basierend auf den Faktoren einen Ladegewohnheits-Score, einen Fahrgewohnheits-Score und einen Parkgewohnheits-Score des Benutzers zu berechnen und den Batteriemanagement-Score als eine Summe oder einen Durchschnitt des Ladegewohnheits-Scores, des Fahrgewohnheits-Scores und des Parkgewohnheits-Scores zu berechnen; und
den Batteriemanagement-Score in einer Datenbank zu speichern.

2. Batterieüberwachungssystem nach Anspruch 1, wobei:
der Batteriemanagement-Score-Rechner (140) konfiguriert ist, um einen Batteriemanagement-Score eines spezifischen Benutzers mit Batteriemanagement-Scores anderer Benutzer, die in der Datenbank gespeichert sind, zu vergleichen; und
der Informationssender (160) konfiguriert ist, um an das Endgerät (600) ein Ergebnis des Vergleichens des Batteriemanagement-Scores des spezifischen Benutzers mit den Batteriemanagement-Scores der anderen Benutzer, die in der Datenbank gespeichert sind, zu senden.

3. Batterieüberwachungssystem nach Anspruch 1, wobei:
das Batterieüberwachungssystem außerdem einen Lebensdauerprädiktor (120) enthält;
der Datenempfänger (110) konfiguriert ist, um von der Datensammelvorrichtung (200) mindestens eines von Spannungs-, Strom-, Temperaturdaten einer Batterie oder einer Kombination der Spannungs-, Strom-, Temperaturdaten der Batterie zu empfangen;
der Lebensdauerprädiktor (120) konfiguriert ist, um eine verbleibende Lebensdauer der Batterie basierend auf dem mindestens einen der Spannungs-, Strom-, Temperaturdaten oder der Kombination der Spannungs-, Strom-, Temperaturdaten unter Verwendung eines auf künstlicher Intelligenz (AI) basierenden Prädiktionsalgorithmus vorherzusagen und die verbleibende Lebensdauer der Batterie in der Datenbank zu speichern; und
der Informationssender (160) konfiguriert ist, um die verbleibende Lebensdauer der Batterie an das Endgerät (600) zu senden.

4. Batterieüberwachungssystem nach Anspruch 3, wobei der Batteriemanagement-Score-Rechner (140) konfiguriert ist, um einen umfassenden Batteriemanagement-Score durch Reflektieren der verbleibenden Lebensdauer in dem Batteriemanagement-Score zu berechnen.

5. Batterieüberwachungssystem nach Anspruch 3, wobei:
der Datenempfänger (110) konfiguriert ist, um Informationen über einen Gesundheitszustand (SOH) der Batterie von der Datensammelvorrichtung (200) zu empfangen;
der Lebensdauerprädiktor (120) konfiguriert ist, um basierend auf den empfangenen SOH-Informationen eine vorhergesagte Austauschzeit der Batterie zu berechnen und die vorhergesagte Austauschzeit der Batterie in der Datenbank zu speichern; und
der Informationssender (160) konfiguriert ist, um an das Endgerät (600) die vorhergesagte Austauschzeit der Batterie zu senden.

6. Batterieüberwachungssystem nach Anspruch 3, wobei:
der Lebensdauerprädiktor (120) konfiguriert ist, um eine verbleibende Lebensdauer einer Batterie eines spezifischen Benutzers mit verbleibenden Lebensdaueren von Batterien anderer Benutzer, die in der Datenbank gespeichert sind, zu vergleichen; und
der Informationssender (160) konfiguriert ist, um an das Endgerät (600) ein Ergebnis des Vergleichens der verbleibenden Lebensdauer der Batterie des spezifischen Benutzers mit den verbleibenden Lebensdaueren der Batterien der anderen Benutzer, die in der Datenbank gespeichert sind, zu senden.

7. Batterieüberwachungssystem nach Anspruch 1, außerdem umfassend:
einen Prädiktor (130) für anormales Verhalten,
wobei der Datenempfänger (110) konfiguriert ist, um von der Datensammelvorrichtung (200) mindestens eines von Spannungs-, Strom-, Temperaturdaten einer Batterie oder einer Kombination der Spannungs-, Strom-, Temperaturdaten der Batterie zu empfangen,
der Prädiktor (130) für anormales Verhalten konfiguriert ist, um ein anormales Batterieverhalten basierend auf dem mindestens einen der Spannungs-, Strom-, Temperaturdaten oder der Kombination der Spannungs-, Strom-, Temperaturdaten unter Verwendung eines auf AI basierenden Prädiktionsalgorithmus zu detektieren und das anormale Batterieverhalten in der Datenbank zu speichern, und
der Informationssender (160) konfiguriert ist, um basierend auf dem anormalen Batterieverhalten ein Risiko eines Unfalls an das Endgerät (600) zu senden.

8. Batterieüberwachungssystem nach Anspruch 7, wobei das anormale Batterieverhalten ein Spannungsungleichgewicht zwischen verschiedenen Batteriezellen mit der Batterie einschließt.

9. Batterieüberwachungssystem nach Anspruch 7, wobei das anormale Batterieverhalten eine Änderung der Temperatur innerhalb der Batterie während des Batterieladens einschließt.

10. Batterieüberwachungssystem nach Anspruch 1, wobei:
der Batteriemanagement-Score-Rechner (140) konfiguriert ist, um basierend auf dem Batteriemanagement-Score Versicherungsprämieninformationen zu erzeugen, die zu verwenden sind, um eine Automobilversicherungsprämie für einen Benutzer zu berechnen; und
der Informationssender (160) konfiguriert ist, um die Versicherungsprämieninformationen an einen externen Computerserver zu senden.

11. Batterieüberwachungssystem nach Anspruch 1, wobei:
der Batteriemanagement-Score-Rechner (140) konfiguriert ist, um basierend auf dem Batteriemanagement-Score Zertifizierungsinformationen zum Zertifizieren oder Sicherstellen der Qualität eines Batteriezustands zu erzeugen; und
der Informationssender (160) konfiguriert ist, um die Zertifizierungsinformationen über den Batteriezustand an einen externen Computerserver zu senden.

12. Batterieüberwachungssystem nach Anspruch 1, wobei:
der Informationssender (160) konfiguriert ist, um an das Endgerät (600) Batteriebuchinformationen zu senden, die in der Datenbank gespeichert sind; und
die Batteriebuchinformationen Produktionsinformationen, die erzeugt werden, wenn eine Batterie produziert wird, Zustandsinformationen, die einen aktuellen Verwendungszustand der Batterie angeben, und Verwendungsinformationen, die einen Verwendungsverlauf der Batterie angeben, einschließen.

13. Verfahren zum Überwachen einer Batterie eines Fahrzeugs, wobei das Verfahren Folgendes umfasst:
Empfangen von Batterieinformationsdaten und Fahrzeuginformationsdaten von einer Datensammelvorrichtung (200), die elektrisch oder kommunikativ mit dem Fahrzeug verbunden ist, wobei die Batterieinformationsdaten und die Fahrzeuginformationsdaten mindestens eines von einer Spannung, einem Strom, einer Temperatur, einem Ladezustand (SOC), einem Gesundheitszustand (SOH), Ladeinformationen, einem Lade-/Entladeverlauf, Fahrinformationen, einer Batterietemperatur oder einer Außentemperatur der Batterie beinhalten;
basierend auf den Batterieinformationsdaten und den Fahrzeuginformationsdaten Faktoren zu berechnen, die die Batterieverschlechterung unter einer Batterieladegewohnheit, einer Fahrgewohnheit und einer Parkgewohnheit eines Benutzers beeinflussen, und
entweder basierend auf den Faktoren einen Batteriemanagement-Score durch Abziehen eines Punkts von einem Gesamtscore zu berechnen, wann immer einer der Faktoren, die die Batterieverschlechterung beeinflussen, angewendet wird, oder basierend auf den Faktoren einen Ladegewohnheits-Score, einen Fahrgewohnheits-Score und einen Parkgewohnheits-Score zu berechnen und einen Batteriemanagement-Score als eine Summe oder einen Durchschnitt des Ladegewohnheits-Scores, des Fahrgewohnheits-Scores und des Parkgewohnheits-Scores zu berechnen;
eine verbleibende Lebensdauer der Batterie basierend auf den empfangenen Batterieinformationsdaten vorherzusagen; und
den Batteriemanagement-Score und die verbleibende Lebensdauer der Batterie an ein Endgerät (600) zu senden.

14. Verfahren nach Anspruch 13, außerdem umfassend:
Berechnen eines umfassenden Batteriemanagement-Scores durch Reflektieren der verbleibenden Lebensdauer in dem Batteriemanagement-Score.

15. Verfahren nach Anspruch 13, außerdem umfassend:
Detektieren eines anormalen Batterieverhaltens basierend auf den empfangenen Batterieinformationsdaten.

## Revendications

1. Système de surveillance de batterie, comprenant :
un récepteur de données (110) en communication avec un dispositif de collecte de données (200) qui est connecté électriquement ou par communication à un véhicule et qui est configuré pour recevoir des données d'information sur la batterie et des données d'information sur le véhicule provenant du dispositif de collecte de données (200), les données d'information sur la batterie et les données d'information sur le véhicule comprenant au moins l'un des éléments suivants : une tension, un courant, une température, un état de charge (SOC), un état de santé (SOH), des informations de charge, un historique de charge/décharge, des informations de conduite, une température de la batterie ou une température extérieure de la batterie ;
un calculateur de score de gestion de batterie (140), couplé pour recevoir les données d'information sur la batterie et les données d'information sur le véhicule ; et
un émetteur d'informations (160) en communication avec un terminal (600) et configuré pour envoyer un score de gestion de batterie au terminal (600),
**caractérisé en ce que**
le calculateur de score de gestion de batterie (140) est configuré pour :
calculer, sur la base des données d'information sur la batterie et des données d'information sur le véhicule, des facteurs influençant la dégradation de la batterie en fonction des habitudes de recharge, de conduite et de stationnement d'un utilisateur ;
soit, sur la base de ces facteurs, calculer le score de gestion de la batterie en soustrayant un point d'un score global chaque fois que l'un des facteurs influençant la dégradation de la batterie est appliqué, soit, sur la base de ces facteurs, de calculer un score d'habitudes de recharge, un score d'habitudes de conduite et un score d'habitudes de stationnement de l'utilisateur, et de calculer le score de gestion de la batterie comme la somme ou la moyenne du score d'habitudes de recharge, du score d'habitudes de conduite et du score d'habitudes de stationnement ; et
enregistrer le score de gestion de la batterie dans une base de données.

2. Système de surveillance de batterie selon la revendication 1, dans lequel :
le calculateur de score de gestion de batterie (140) est configuré pour comparer le score de gestion de batterie d'un utilisateur spécifique aux scores de gestion de batterie d'autres utilisateurs stockés dans la base de données ; et
l'émetteur d'informations (160) est configuré pour envoyer au terminal (600) un résultat de la comparaison entre le score de gestion de batterie de l'utilisateur spécifique et les scores de gestion de batterie des autres utilisateurs stockés dans la base de données.

3. Système de surveillance de batterie selon la revendication 1, dans lequel :
le système de surveillance de batterie comprend en outre un prédicteur de durée de vie (120) ;
le récepteur de données (110) est configuré pour recevoir, depuis le dispositif de collecte de données (200) , au moins l'une des données de tension, de courant et de température d'une batterie, ou une combinaison des données de tension, de courant et de température de la batterie ;
le prédicteur de durée de vie (120) est configuré pour prédire une durée de vie restante de la batterie sur la base de l'au moins une des données de tension, de courant, de température ou de la combinaison des données de tension, de courant et de température, à l'aide d'un algorithme de prédiction basé sur l'intelligence artificielle (IA), et pour stocker la durée de vie restante de la batterie dans la base de données ; et
l'émetteur d'informations (160) est configuré pour transmettre la durée de vie restante de la batterie au terminal (600).

4. Système de surveillance de batterie selon la revendication 3, dans lequel le calculateur de score de gestion de batterie (140) est configuré pour calculer un score global de gestion de batterie en intégrant la durée de vie restante dans ce score.

5. Système de surveillance de batterie selon la revendication 3, dans lequel :
le récepteur de données (110) est configuré pour recevoir des informations sur l'état de santé (SOH) de la batterie provenant du dispositif de collecte de données (200) ;
le prédicteur de durée de vie (120) est configuré pour calculer, sur la base des informations SOH reçues, une date de remplacement prévue de la batterie et pour enregistrer cette date de remplacement prévue de la batterie dans la base de données ; et
l'émetteur d'informations (160) est configuré pour transmettre au terminal (600) la date de remplacement prévue de la batterie.

6. Système de surveillance de batterie selon la revendication 3, dans lequel :
le prédicteur de durée de vie (120) est configuré pour comparer la durée de vie restante d'une batterie d'un utilisateur spécifique aux durées de vie restantes des batteries d'autres utilisateurs stockées dans la base de données ; et
l'émetteur d'informations (160) est configuré pour envoyer au terminal (600) un résultat de la comparaison entre la durée de vie restante de la batterie de l'utilisateur spécifique et les durées de vie restantes des batteries des autres utilisateurs stockées dans la base de données.

7. Système de surveillance de batterie selon la revendication 1, comprenant en outre :
un prédicteur (130) de comportement anormal,
le récepteur de données (110) étant configuré pour recevoir, depuis le dispositif de collecte de données (200), au moins l'une des données de tension, de courant et de température d'une batterie, ou une combinaison des données de tension, de courant et de température de la batterie,
le prédicteur (130) de comportement anormal est configuré pour détecter un comportement anormal de la batterie sur la base de l' , d'au moins l'une des données de tension, de courant et de température ou de la combinaison des données de tension, de courant et de température, à l'aide d'un algorithme de prédiction basé sur l'IA, et pour enregistrer le comportement anormal de la batterie dans la base de données, et
l'émetteur d'informations (160) est configuré pour envoyer, sur la base du comportement anormal de la batterie, une alerte de risque d'accident au terminal (600).

8. Système de surveillance de batterie selon la revendication 7, dans lequel le comportement anormal de la batterie comprend un déséquilibre de tension entre différentes cellules de la batterie.

9. Système de surveillance de batterie selon la revendication 7, dans lequel le comportement anormal de la batterie comprend une variation de température à l'intérieur de la batterie pendant la charge de celle-ci.

10. Système de surveillance de batterie selon la revendication 1, dans lequel :
le calculateur de score de gestion de batterie (140) est configuré pour générer, sur la base du score de gestion de batterie, des informations relatives aux primes d'assurance destinées à être utilisées pour calculer une prime d'assurance automobile pour un utilisateur ; et
l'émetteur d'informations (160) est configuré pour envoyer les informations relatives aux primes d'assurance à un serveur informatique externe.

11. Système de surveillance de batterie selon la revendication 1, dans lequel :
le calculateur de score de gestion de batterie (140) est configuré pour générer, sur la base du score de gestion de batterie, des informations de certification destinées à certifier ou à garantir la qualité d'un état de batterie ; et
l'émetteur d'informations (160) est configuré pour envoyer les informations de certification relatives à l'état de la batterie à un serveur informatique externe.

12. Système de surveillance de batterie selon la revendication 1, dans lequel :
l'émetteur d'informations (160) est configuré pour envoyer au terminal (600) des informations du carnet de batterie stockées dans la base de données ; et
les informations du carnet de batterie comprennent des informations de production générées lors de la fabrication d'une batterie, des informations d'état indiquant l'état d'utilisation actuel de la batterie, et des informations d'utilisation indiquant l'historique d'utilisation de la batterie.

13. Procédé de surveillance d'une batterie d'un véhicule, ledit procédé comprenant :
la réception de données d'informations sur la batterie et de données d'informations sur le véhicule provenant d'un dispositif de collecte de données (200) connecté électriquement ou par communication au véhicule, les données d'informations sur la batterie et les données d'informations sur le véhicule comprenant au moins l'un des éléments suivants : une tension, un courant, une température, un état de charge (SOC), un état de santé (SOH) de l' , des informations de charge, un historique de charge/décharge, des informations de conduite, une température de la batterie ou une température extérieure de la batterie ;
calculer, sur la base des données d'information sur la batterie et des données d'information sur le véhicule, des facteurs influençant la dégradation de la batterie en fonction des habitudes de charge de la batterie, des habitudes de conduite et des habitudes de stationnement d'un utilisateur, et
soit calculer, sur la base de ces facteurs, un score de gestion de la batterie en soustrayant un point d'un score global chaque fois que l'un des facteurs influençant la dégradation de la batterie est appliqué, soit, sur la base de ces facteurs, de calculer un score relatif aux habitudes de recharge, un score relatif aux habitudes de conduite et un score relatif aux habitudes de stationnement, puis de calculer un score de gestion de la batterie correspondant à la somme ou à la moyenne de ces scores ;
prévoir la durée de vie restante de la batterie sur la base des données d'information sur la batterie reçues ; et
transmettre le score de gestion de la batterie et la durée de vie restante de la batterie à un terminal (600).

14. Procédé selon la revendication 13, comprenant en outre :
le calcul d'un score global de gestion de la batterie en intégrant la durée de vie restante dans ce score.

15. Procédé selon la revendication 13, comprenant en outre :
la détection d'un comportement anormal de la batterie sur la base des données d'information sur la batterie reçues.
